(19) **Europäisches Patentamt / European Patent Office / Office européen des brevets**

(11) **EP 3 967 445 A1**

(12) # EUROPEAN PATENT APPLICATION
published in accordance with Art. 153(4) EPC

(43) Date of publication:
**16.03.2022 Bulletin 2022/11**

(21) Application number: **20801455.5**

(22) Date of filing: **01.05.2020**

(51) International Patent Classification (IPC):
**B23K 35/368** (2006.01)   **B23K 35/30** (2006.01)
**C22C 19/05** (2006.01)

(52) Cooperative Patent Classification (CPC):
**B23K 35/30; B23K 35/368; C22C 19/05**

(86) International application number:
**PCT/JP2020/018457**

(87) International publication number:
**WO 2020/226148 (12.11.2020 Gazette 2020/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.05.2019 JP 2019089014**

(71) Applicant: **KABUSHIKI KAISHA KOBE SEIKO SHO
(KOBE STEEL, LTD.)
Hyogo 651-8585 (JP)**

(72) Inventors:
• **MUKAI, Naoki
Fujisawa-shi, Kanagawa 251-8551 (JP)**
• **IZUTANI, Shun
Fujisawa-shi, Kanagawa 251-8551 (JP)**

(74) Representative: **Müller-Boré & Partner
Patentanwälte PartG mbB
Friedenheimer Brücke 21
80639 München (DE)**

(54) **FLUX-CORED WIRE, WELDING METHOD, AND WELD METAL**

(57)   The present invention relates to a flux-cored wire which can be used for straight-polarity gas-shielded arc welding, wherein a flux contains one or several types of metal compound powders and, when one or several metal elements constituting the metal compound powders are formed into stable compounds under a high-temperature environment, the relationship between the weighted geometric mean value ($\Phi$) of the work functions of the stable compounds and the wire diameter (D) of the flux-cored wire satisfies the following formula: $\{1.00 \le \Phi \le -0.0908D^2 + 0.5473D + 1.547\}$.

FIG. 4

EP 3 967 445 A1

**Description**

Technical Field

The present invention relates to a flux-cored wire and more particularly to a flux-cored wire with high welding efficiency. The present invention also relates to a welding method and a weld metal including the flux-cored wire.

Background Art

Flux-cored wires are widely used welding materials due to their high execution efficiency and weldability. For this reason, various flux-cored wires have been developed for a wide range of welding techniques, among which there is a flux-cored wire characterized by applying straight polarity (hereinafter also referred to as "DCEN") for welding. The straight polarity refers to an electrode arrangement in which a wire is a cathode and a base material is an anode.
For example, Patent Literature 1 discloses a gas-shielded arc welding flux-cored wire that allows for stable spray arc over a wide current range and has high weldability.
Patent Literature 2 discloses a flux-cored wire that generates a small amount of spatter and has high weldability in all positions and high toughness in a welding current range of a low current to a medium current. In Patent Literature 2, the welding current range of a low current to a medium current refers to approximately 70 to 300 A.
Patent Literature 3 also discloses a flux-cored wire that has high all-position weldability and toughness in a welding current range of a low current to a medium current. In Patent Literature 3, the welding current range of a low current to a medium current refers to approximately 50 to 300 A.

Citation List

Patent Literature

PTL 1: Japanese Unexamined Patent Application Publication No. 02-055696
PTL 2: Japanese Unexamined Patent Application Publication No. 11-207491
PTL 3: Japanese Unexamined Patent Application Publication No. 11-058069

Summary of Invention

Technical Problem

Although attention has been paid to the welding current range in which the flux-cored wires described in Patent Literature 1 to Patent Literature 3 are used, no attention has been paid to the wire melting rate. The present inventors have conducted studies focusing on the melting rate of flux-cored wires and have found that these flux-cored wires have a significantly lower wire melting rate than typical flux-cored wires containing a large amount of titanium oxide. The wire melting rate refers to the wire melt length per unit time.
The wire melting rate is synonymous with the wire feed speed, is directly related to the deposition rate, and is therefore an important control factor of welding efficiency. Accordingly, it is an object of the present invention to provide a flux-cored wire for straight-polarity gas-shielded arc welding that can have an increased wire feed speed without increasing thermal energy, such as welding current, has high execution efficiency for the same heat input, and can reduce the welding cost in welding. The deposition rate indicates the amount of weld metal formed per unit time.

Solution to Problem

As a result of extensive studies, the present inventors have completed the present invention by finding that the above problems can be solved by setting the work function of a metal compound powder constituting a flux in a flux-cored wire in a specific range.
The present invention relates to the following [1] to [11].

[1] A flux-cored wire for use in straight-polarity gas-shielded arc welding,

wherein a flux of the flux-cored wire contains one or several types of metal compound powders, and
when one or several types of metal elements constituting the metal compound powders are stable compounds in a high-temperature environment, a weighted geometric mean of work functions of the stable compounds satisfies the following relationship with a wire diameter of the flux-cored wire:

$$1.00 \leq \Phi \leq -0.0908D^2 + 0.5473D + 1.547$$

$$\Phi = \Phi_1{}^{n1/ntotal} \times \Phi_2{}^{n2/ntotal} \cdots \times \Phi_m{}^{nm/ntotal}$$

wherein D denotes the wire diameter (mm), $\Phi$ denotes the weighted geometric mean of the work functions of the stable compounds (eV), and $\Phi_1$ to $\Phi_m$ (m denotes a natural number) denote the respective work functions (eV) of m types of stable compounds, $n_1$ to $n_m$ denote respective amounts (mol/g) of m types of metal elements that become the m types of stable compounds in a total mass of the flux-cored wire, and $n_{total}$ denotes a total amount (mol/g) of the m types of metal elements in the total mass of the flux-cored wire.

[2] The flux-cored wire according to [1], wherein the stable compounds are oxides or a mixture of oxides.

[3] The flux-cored wire according to [1], wherein the stable compounds have a work function of 4.0 eV or less.

[4] The flux-cored wire according to [1], wherein the metal compound powders include one or several types of metal fluoride powders, and a total amount of metal oxide powder in the metal compound powders is 0.5% or less by mass of the total mass of the wire.

[5] The flux-cored wire according to [1], containing a total amount of $1.0 \times 10^{-4}$ mol/g or more of at least one of a metal powder and an inorganic compound powder with a boiling point of 1600°C or less based on the total mass of the wire.

[6] The flux-cored wire according to [2], containing a total amount of $1.0 \times 10^{-4}$ mol/g or more of at least one of a metal powder and an inorganic compound powder with a boiling point of 1600°C or less based on the total mass of the wire.

[7] The flux-cored wire according to [3], containing a total amount of $1.0 \times 10^{-4}$ mol/g or more of at least one of a metal powder and an inorganic compound powder with a boiling point of 1600°C or less based on the total mass of the wire.

[8] The flux-cored wire according to [4], containing a total amount of $1.0 \times 10^{-4}$ mol/g or more of at least one of a metal powder and an inorganic compound powder with a boiling point of 1600°C or less based on the total mass of the wire.

[9] The flux-cored wire according to [1], containing pure Fe, an Fe-based alloy, or a Ni-based alloy as a sheath.

[10] A weld metal formed by welding with a flux-cored wire according to any one of [1] to [9].

[11] A welding method using the flux-cored wire according to any one of [1] to [9] and a shielding gas.

Advantageous Effects of Invention

A flux-cored wire and a welding method including the flux-cored wire according to the present invention can be used to increase the wire feed speed without increasing thermal energy, such as welding current. This can increase execution efficiency for the same heat input, improve the efficiency of the welding operation, and reduce the welding cost.

Brief Description of Drawings

[Fig. 1] Fig. 1 is a graph showing a change in the temperature of a thorium-doped tungsten electrode.
[Fig. 2] Fig. 2 is a graph showing the relationship between thermionic current and work function at 2300 K for each wire diameter.
[Fig. 3] Fig. 3 is a graph showing the relationship between wire diameter and work function for a stable hot cathode property.
[Fig. 4] Fig. 4 is a graph showing the relationship between the weighted geometric mean of work functions of stable compounds and the wire feed speed.

Description of Embodiments

Modes (embodiments) for carrying out a flux-cored wire according to the present invention and a welding method and a weld metal including the flux-cored wire are described below. However, the present embodiments are examples, and the present invention is not limited to these embodiments. Unless otherwise specified, "%" means "% by mass".

«Flux-Cored Wire»

A flux-cored wire (hereinafter also referred to simply as a "wire") according to the present embodiment is used for straight-polarity gas-shielded arc welding and is composed of a tubular sheath and a flux filled within the sheath. The straight polarity refers to an electrode arrangement in which the electrode side is negative and the base material side is positive.

The flux-cored wire may be of a seamless type without a seam in the sheath or of a seam type with a seam in the sheath. The flux-cored wire may or may not be copper plated on the wire surface outside the sheath. The sheath may be made of any material, such as mild steel, stainless steel, or a Ni-based alloy, and the deposited metal may be Fe-based or Ni-based and is not particularly limited as long as the features of the present invention are satisfied.

The flux of the flux-cored wire according to the present embodiment contains one or several types of metal compound powders.

When one or several types of metal elements constituting the metal compound powders are stable compounds in a high-temperature environment, the weighted geometric mean of work functions of the stable compounds satisfies the following relationship with the wire diameter of the flux-cored wire.

$$1.00 \leq \Phi \leq -0.0908D^2 + 0.5473D + 1.547$$

$$\Phi = \Phi_1^{n1/ntotal} \times \Phi_2^{n2/ntotal} \cdots \times \Phi_m^{nm/ntotal}$$

In the formulae, D denotes the wire diameter (mm), $\Phi$ denotes the weighted geometric mean of the work functions of the stable compounds (eV), and $\Phi_1$ to $\Phi_m$ (m denotes a natural number) denote the respective work functions (eV) of m types of stable compounds, $n_1$ to $n_m$ denote respective amounts (mol/g) of m types of metal elements that become the m types of stable compounds in a total mass of the flux-cored wire, and $n_{total}$ denotes a total amount (mol/g) of the m types of metal elements in the total mass of the flux-cored wire.

<Mechanism for Improving Feed Speed of Flux-Cored Wire>

Typical flux-cored wires are known to be suitable for reverse-polarity gas-shielded arc welding (hereinafter also referred to as "DCEP"). The reverse polarity refers to an electrode arrangement in which a wire is an anode and a base material is a cathode. For example, a typical titanium oxide flux-cored wire with a wire diameter (D) of 1.2 mm had a wire feed speed of 8.4 m/min at DCEP-200A. On the other hand, when a flux-cored wire described in Patent Literature 2, that is, a flux-cored wire with an Al content of 2.3% by weight, an Mg content of 0.6% by weight, a $BaF_2$ content of 3% by weight, a Zr content of 0.1% by weight, a flux filling ratio of 13% by weight, and a wire diameter of 1.2 mm was experimentally produced and tested, the wire feed speed was 5.3 m/min at DCEN-200A for straight polarity. Thus, it was found that the wire feed speed at the same current was decreased by as much as 37%. Thus, it has been found that wires disclosed in the related art have a significantly lower wire feed speed at the same welding current than typical flux-cored wires containing a large amount of titanium oxide. This results in low execution efficiency for the same heat input and greatly affects the welding cost in actual construction.

In view of such a background, the present invention is directed to a flux-cored wire to which straight polarity is applied and has clarified factors that have an important influence on wire melt properties and the mechanism thereof.

It is generally known that welding wires used with straight polarity have low arc stability and poor welding. In contrast, basic flux-cored wires as disclosed in Patent Literature 1 to Patent Literature 3 designed for straight polarity have high arc stability even with straight polarity. It is also known that a stable arc can be produced in gas tungsten arc welding (hereinafter also referred to as "GTAW"), which is generally performed with straight polarity using a tungsten electrode as a non-consumable electrode. On the basis of the reason for high arc stability of the GTAW, the present invention has elucidated the mechanism that can produce a stable arc with straight polarity even with a flux-cored wire, increase the wire feed speed without increasing thermal energy, such as welding current, and improve weldability.

First, the mechanism of the GTAW is described. Tungsten used for electrodes has a high melting point of 3695K. While welding, therefore, the electrodes are not melted and are heated to very high temperatures in a solid state. High-temperature substances are known to emit thermoelectrons in accordance with the following Richardson-Dushmann equation, and tungsten electrodes also probably emit thermoelectrons while welding.

Richardson-Dushmann equation

$$Je = A_0 T^2 \exp(-eV_w/kT)$$

Je: current density due to thermionic emission [A/cm$^2$], $A_0$: Richardson constant (120.4 [A/cm$^2\cdot$K$^2$]), T: absolute temperature [K], e: elementary charge (1.602 $\times$ 10$^{-19}$ [C]), $V_w$: work function [eV], k: Boltzmann constant (1.381 $\times$ 10$^{-23}$ [J/K])

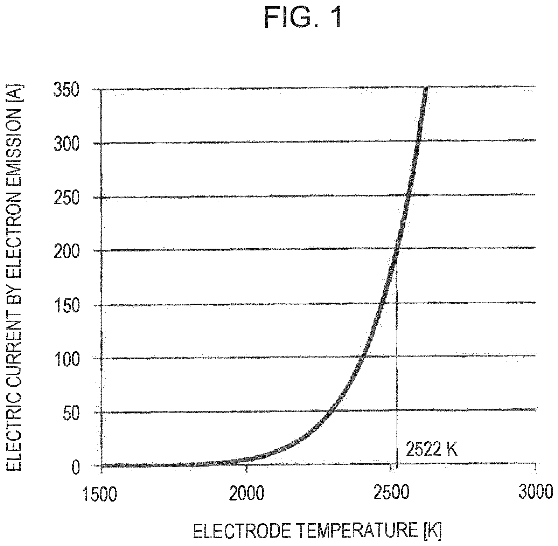

Here, for example, consider that a welding current of 200 A is flowing. Thorium-doped tungsten electrodes widely used for electrode of the GTAW are known to have a work function ($V_w$) of 2.63 eV (see Ando et al., Yosetsu Aku Gensho (enlarged edition), Sanpo (1967)). When an arc is generated at an electrode tip angle of 60 degrees in the range of 1.5 mm from the tip, the arc generating portion has a surface area of 4.71 mm$^2$. In this case, according to the Richardson-Dushmann equation, the thorium-doped tungsten electrode temperature will change as shown in Fig. 1. According to this change, when the arc generating portion is heated to 2522K, stable thermionic emission can supply an electric current of 200 A and stabilize the arc. Because tungsten has a melting point of 3695K, the electrode can be maintained in a solid state while the arc is stable at 2522K. The state of the cathode that supplies the electric current necessary for electrical discharge by thermionic emission is referred to as a "hot cathode". In the hot cathode, the electrode temperature is maintained by the electrode losing energy or in other words being cooled by thermionic emission.

Taking the above into account, a flux-cored wire is discussed below.

A wire sheath of a flux-cored wire is limited by the type of base material to be welded and the intended joint performance. Thus, steel is often employed for the wire sheath. Steel has a melting point of approximately 1770K. Thus, a typical composition contained in flux-cored wires containing a large amount of titanium oxide cannot supply thermoelectrons according to the Richardson-Dushmann equation in a solid-state or at the temperature of a droplet before leaving from the wire tip. Such a typical composition is titanium oxide ($V_w$: 3.87 eV), silicon oxide ($V_w$: 5.00 eV) (see G. V. Samsonov, translated by Endo, Saishin Sankabutsu Binran: Butsuriteki Kagakuteki Seishitsu, Nichi-So Tsushin-sha (1979)), iron, an alloying element, or the like.

Thus, in the present invention, it has been thought that a flux-cored wire can also be used as a hot cathode by incorporating a substance potentially having a low work function as a flux to promote thermionic emission. The substance potentially having a low work function may be BaF$_2$ (hereinafter also referred to as "barium fluoride"). Barium fluoride releases fluorine at high temperatures in the presence of oxygen. Barium has a high affinity for oxygen and forms barium oxide in the presence of oxygen. Barium oxide has a very low work function of 0.99 eV. Thus, it is easy to have the hot cathode property.

When a flux-cored wire melts, the wire sheath and the metal powder contained in the flux are easily mixed. However, the metal powder is not mixed with a compound that is stable in the fusion zone in a high-temperature environment (hereinafter also referred to as a "stable compound"). Although the compound that is stable in a high-temperature environment may be an oxide, carbide, sulfide, nitride, or the like, from the perspective of affinity, the compound may often be an oxide, such as barium oxide, as described above. Although these stable compounds are easily mixed with each other, the stable compounds are not mixed with molten metal. The molten metal refers to a molten single metal or a molten alloy.

Thus, in a wire used with straight polarity, a molten metal portion and a portion with a low work function in the stable compound portion become cathode spots and generate an arc. The molten metal portion, however, has a relatively high work function ($V_w$), for example, in the range of 4.67 to 4.81 eV for iron and 5.04 to 5.35 eV for Ni (see CRC Handbook of Chemistry and Physics, 78th edition, CRC Press (1998)). Thus, the molten metal portion cannot be a stable cathode spot, and therefore stability in the straight-polarity arc welding depends largely on the properties of the stable compound.

When barium fluoride is added as a metal compound powder to the flux, barium oxide is produced in the wire fusion zone while welding, as described above. This stable compound, barium oxide, easily emits thermoelectrons and makes the hot cathode very stable. However, it has been found that the addition of barium fluoride alone decreases the wire feed speed due to a strong cooling effect.

Taking the above into account, the present invention provides a wire with high arc stability by controlling the work function of a stable compound acting as a cathode spot to avoid a decrease in wire feed speed and to maintain a stable hot cathode property.

Control of the work function of a stable compound is described below.

The control of the work function of a stable compound is describe firstly on the following assumptions 1 and 2.

1. The droplet surface temperature in stable metal active gas (MAG) welding is approximately 2300K (see Yamazaki et al., The Surface Temperature Measurement of Weld Pool by Infrared Two-Color Pyrometry, Quarterly Journal of the Japan Welding Society, Vol. 27 (2009)), which is considered to be the standard.

2. The area of the arc generating portion is the same as the wire cross-sectional area.

Next, assuming arc discharge from the wire tip, the relationship between the work function assumed for the stable compound and the corresponding thermionic current at 2300K was determined from the Richardson-Dushmann equation. The calculation was performed in the wire diameter (D) range of 1.0 to 2.0 mm.

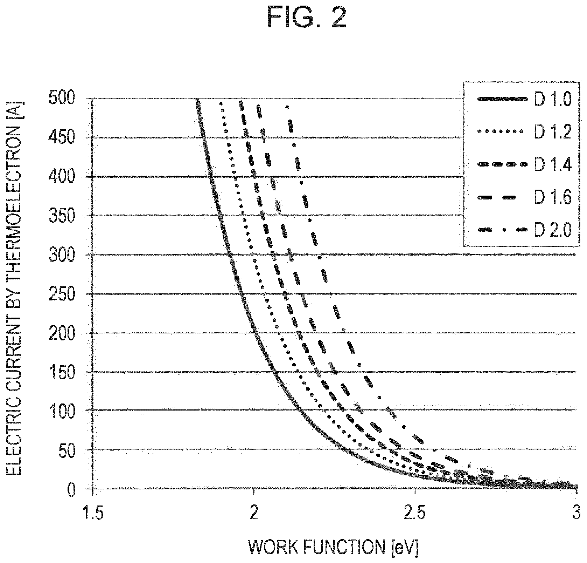

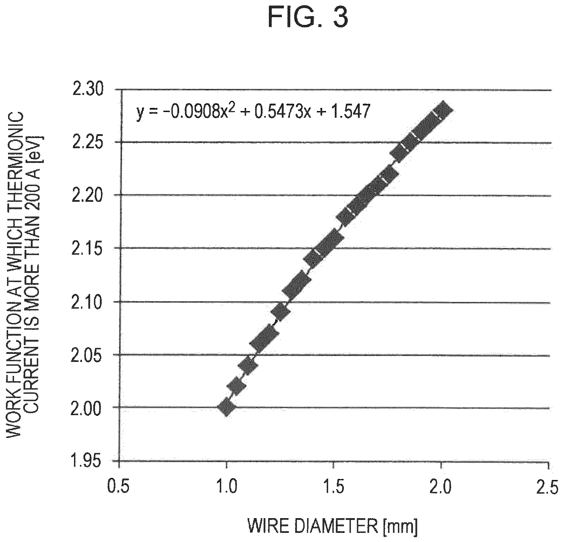

Fig. 2 shows the relationship between work function and electric current at representative diameters among the wire diameters for calculation. The plot of Fig. 3 shows the work function at which the thermionic current is more than 200 A in each wire diameter (D) based on the calculation results. Quadratic approximate curve fitting of the plot of Fig. 3 yields the right-hand side of the following formula. The value of the right-hand side can indicate the upper limit of the work function of a metal stable compound for a stable hot cathode property in each wire diameter.

$$y \leq -0.0908x^2 + 0.5473x + 1.547$$

In the formula, x denotes the wire diameter (mm), and y denotes the work function of the metal stable compound for the stable hot cathode property.

In actual welding, it is difficult to accurately measure the temperature and area of the arc generating portion and the work function of the stable compound in the wire fusion zone. Thus, the composition of the stable compound was examined from the experimental results with reference to the work function of a stable compound that is assumed to be formed from a metal compound powder to be added. The stable compound is assumed herein to be an oxide.

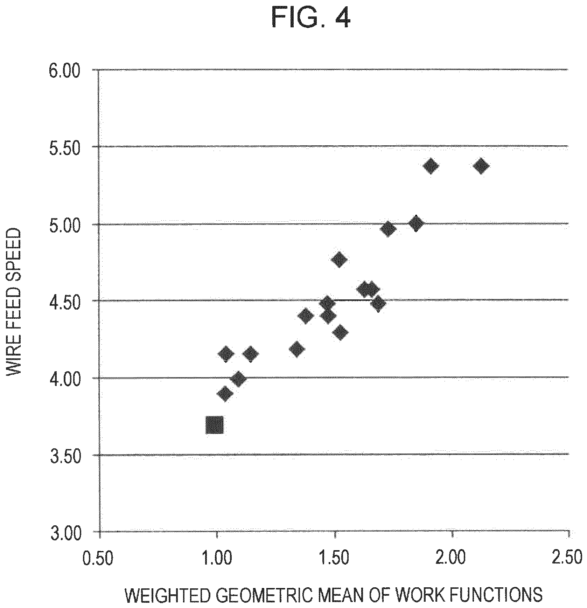

As a result, as shown in Fig. 4, for m types of metal elements constituting one or several types of metal compound powders in the wire, the wire feed speed was found to be correlated well with the geometric mean ($\Phi$) of the work functions of m types of stable compounds in a high-temperature environment weighted by the mole fraction of each metal element. Thus, it was thought that this value can serve as the work functions of the stable compounds. The weighted geometric mean of the work functions of the stable compounds is represented by the following formula.

$$\Phi = \Phi_1{}^{n1/ntotal} \times \Phi_2{}^{n2/ntotal} \cdots \times \Phi_m{}^{nm/ntotal}$$

In the formula, $\Phi$ denotes the weighted geometric mean of the work functions of the stable compounds (eV), $\Phi_1$ to $\Phi_m$ (m denotes a natural number) denote the respective work functions (eV) of m types of stable compounds, $n_1$ to $n_m$ denote respective amounts (mol/g) of m types of metal elements that become the m types of stable compounds in a total mass of the flux-cored wire, and $n_{total}$ denotes a total amount (mol/g) of the m types of metal elements in the total mass of the flux-cored wire.

The weighted geometric mean of the work function of the metal stable compound ($\Phi$, eV) calculated by the above formula can be controlled in the range of 1.00 to a value represented by ($-0.0908D^2 + 0.5473D + 1.547$), wherein D denotes the wire diameter (mm), to achieve both arc stability in straight polarity and a high deposition rate.

In addition to the above, it has been found that a low-boiling substance may be added to the flux of the flux-cored wire to further improve arc stability. The effects of the low-boiling substance are described below.

In droplet transfer in MAG welding, a force generally referred to as an electromagnetic pinch force, that is, a force of a substance through which an electric current flows contracting in the direction of the center of the flow acts on a molten portion of a wire, and the molten portion at the tip of the wire is separated and falls as a droplet. On the other hand, in the flux-cored wire that can produce a stable arc with straight polarity as described above, an electric current flows mainly from a stable compound, and a large electric current does not flow into a droplet at the tip of the wire. Thus, the driving force for droplet transfer must be applied in a form other than the electromagnetic pinch force and is explosive force accompanying the gasification of a low-boiling substance contained in the flux.

The low-boiling substance is required to evaporate near the tip of the wire and apply explosive force to a droplet. Thus, the low-boiling substance preferably has a boiling point of 1600°C or less, which is close to the melting point of steel, more preferably 1300°C or less.

The low-boiling substance may be a metal powder or inorganic compound powder with a boiling point of 1600°C or less, more specifically, Li, Mg, Zn, $AlF_3$, or the like. In the case of metal, even an alloy evaporates sufficiently, and a metal powder, such as an Al-Li alloy or an Al-Mg alloy, may be added. The inorganic compound powder may also be one with a boiling point of 1600°C or less among the metal compound powders.

The explosive force depends on the volume after gasification. Thus, the total low-boiling substance content is preferably $1.0 \times 10^{-4}$ mol/g or more in terms of the amount of substance per the total mass of the wire.

<Flux>

The conceivable composition of the flux-cored wire according to the present embodiment that reflects the above mechanism is described in detail below. Unless otherwise specified, the mass of each component in a wire, that is, in a sheath and a flux is defined by the ratio (%) with respect to the total mass of the wire.

• Metal Compound Powder

The flux-cored wire according to the present embodiment is used for straight-polarity gas-shielded arc welding, and the flux contains one or several types of metal compound powders. When one or several types of metal elements constituting the metal compound powders are stable compounds in a high-temperature environment, the weighted geometric mean of the work functions of the stable compounds satisfies the following relationship with the wire diameter of the flux-cored wire:

$$1.00 \leq \Phi \leq -0.0908D^2 + 0.5473D + 1.547$$

$$\Phi = \Phi_1{}^{n1/ntotal} \times \Phi_2{}^{n2/ntotal} \ldots \times \Phi_m{}^{nm/ntotal}$$

In the formulae, D denotes the wire diameter (mm), $\Phi$ denotes the weighted geometric mean of the work functions of the stable compounds (eV), and $\Phi_1$ to $\Phi_m$ (m denotes a natural number) denote the respective work functions (eV) of m types of stable compounds, $n_1$ to $n_m$ denote respective amounts (mol/g) of m types of metal elements that become the m types of stable compounds in a total mass of the flux-cored wire, and $n_{total}$ denotes a total amount (mol/g) of the m types of metal elements in the total mass of the flux-cored wire.

When a stable compound of a metal element constituting the metal compound powder(s) in a high-temperature environment is an oxide, the oxide has a standard Gibbs energy of formation of -150 kcal/mol $O_2$ or less at 1500°C to 1600°C and relates to an element with a high affinity for oxygen. The oxide relating to an element with a high affinity for oxygen is also referred to as a stable oxide or a stable composite oxide.

When a stable compound of a metal element constituting the metal compound powder(s) in a high-temperature environment is a sulfide, the sulfide has a standard Gibbs energy of formation of -80 kcal/mol $S_2$ or less at 1500°C to 1600°C and relates to an element with a high affinity for sulfur. The sulfide relating to an element with a high affinity for sulfur is also referred to as a stable sulfide or a stable composite sulfide.

When a stable compound of a metal element constituting the metal compound powder(s) in a high-temperature environment is a nitride, the nitride has a standard Gibbs energy of formation of -50 kcal/mol $N_2$ or less at 1500°C to 1600°C and relates to an element with a high affinity for nitrogen. The nitride relating to an element with a high affinity for nitrogen is also referred to as a stable nitride or a stable composite nitride.

When a stable compound of a metal element constituting the metal compound powder(s) in a high-temperature environment is a carbide, the carbide has a standard Gibbs energy of formation of -20 kcal/mol C or less at 1500°C to 1600°C and relates to an element with a high affinity for carbon. The carbide relating to an element with a high affinity for carbon is also referred to as a stable carbide or a stable composite carbide.

Many elements are often most stable in their oxide forms, and stable oxides have relatively low work functions. Thus, the stable compounds are preferably stable oxides or stable composite oxides in terms of the controllability and work functions of the stable compounds.

For example, when the metal compound powder is $BaF_2$, a stable state of the metal element Ba at 1500°C to 1600°C, that is, a compound of Ba with the lowest standard Gibbs energy of formation is a metal oxide BaO. BaO has a standard Gibbs energy of formation in the range of -180 to -185 kcal/mol $O_2$ and a work function of 0.99 eV. Likewise, for example, when the metal elements are Mg, Al, Sr, and Ca, the stable compounds in the same temperature range are metal oxides MgO, $Al_2O_3$, SrO, and CaO, respectively, and their work functions are 3.31 eV, 3.90 eV, 1.27 eV, and 1.77 eV, respectively (see Ando et al., Yosetsu Aku Gensho (enlarged edition), Sanpo (1967)). The stable compound of each metal element has a uniquely defined work function specific to the compound.

The weighted geometric mean ($\Phi$) of the work function of the stable compound satisfies the above relationship with the wire diameter (D).

For example, when the metal compound powder in the flux is $BaF_2$:$CaF_2$:$AlF_3$ = 2.4:0.4:0.7 (mass ratio), there are three types of constituent metal elements, that is, m is 3 in the formula, and the ratio Ba:Ca:Al is 0.52:0.18:0.30 (mole fraction). Stable compounds thereof are BaO (work function: 0.99 eV), CaO (work function: 1.77 eV), and $Al_2O_3$ (work function: 3.90 eV), respectively, and the weighted geometric mean ($\Phi$) is ($0.99^{0.52} \times 1.77^{0.18} \times 3.90^{0.30}$) = 1.66 eV. The above composition corresponds to Example 2 described later.

The weighted geometric mean ($\Phi$) of work functions thus calculated is 1.00 eV or more, preferably 1.02 eV or more, more preferably 1.04 eV or more, in terms of a high wire feed speed, that is, high weldability. Furthermore, it is $\{-0.0908D^2 + 0.5473D + 1.547\}$ or less in terms of arc stability.

A stable compound produced from a metal fluoride powder in the wire fusion zone preferably has a work function of 4.0 eV or less to improve weldability.

A metal compound powder in the flux is a compound containing a metal element and is not a metal powder composed of a single metal or an alloy. The metal compound powder is a metal fluoride powder, a metal oxide powder, or a metal carbonate powder, for example, and preferably contains one or several types of metal fluoride powders.

(Metal Fluoride Powder)

The metal fluoride powder may be $BaF_2$, $SrF_2$, $CaF_2$, $AlF_3$, or the like.

$BaF_2$ can stabilize a cathode spot, stabilize an arc, and thereby reduce the amount of spatter generation in straight-polarity gas-shielded arc welding. The $BaF_2$ content is preferably 1.0% or more, more preferably 1.2% or more.

Furthermore, a $BaF_2$ content of 4.5% or less results in the prevention of an excessive decrease in work function in the wire fusion zone and high deposition rate performance. The $BaF_2$ content is preferably 4.0% or less, more preferably 3.0% or less, in terms of higher deposition rate performance.

The addition of $SrF_2$, $CaF_2$, or $AlF_3$ together with $BaF_2$ can control the work function in the wire fusion zone and increase the amount of welding. An excessively high amount thereof results in an excessively high work function and unstable arc. Thus, the $SrF_2$ content is preferably 1.5% or less, more preferably 1.3% or less. The $CaF_2$ content is preferably 1.5% or less, more preferably 1.3% or less. The $AlF_3$ content is preferably 1.5% or less, more preferably 1.2% or less. The total amount thereof is preferably 5.0% or less, more preferably 2.0% or less, to suppress excessive fluorine generation and further stabilize droplet transfer.

Furthermore, at least one selected from the group consisting of $SrF_2$, $CaF_2$, and $AlF_3$ is preferably contained, and the total amount thereof is preferably 0.1% or more to maintain high deposition rate performance, more preferably 0.3% or more.

The flux may also contain another fluoride powder other than $BaF_2$, $SrF_2$, $CaF_2$, and $AlF_3$. The other fluoride powder may be LiF, NaF, $MgF_2$, $K_2SiF_6$, KF, or the like.

The total fluoride powder content is preferably more than 2% by mass of the total mass of the wire to stabilize a cathode spot, more preferably 2.5% or more. Furthermore, the total fluoride powder content is preferably 6% or less to stabilize droplet transfer, more preferably 5% or less, still more preferably 4.5% or less.

The ratio {($BaF_2$ + $SrF_2$ + $CaF_2$ + $AlF_3$)/the sum of fluoride powders} of the total $BaF_2$, $SrF_2$, $CaF_2$, and $AlF_3$ content to the total fluoride powder content is preferably 0.5 or more to stabilize a cathode spot, more preferably 0.6 or more. The upper limit is 1, that is, another fluoride powder is not necessarily contained.

(Other Metal Compound Powders)

A metal compound powder other than the metal fluoride powders may be a metal oxide powder, a metal carbonate powder, a metal nitride powder, or the like.

• Metal Powder

The flux may contain a metal powder. The metal powder may be a single metal powder or a metal powder of an alloy. The flux may contain one or more metal powders.

A metal element constituting the metal powders may be Fe, Mn, Si, Al, Mg, Zr, C, Ni, Li, Zn, Cr, or the like. In particular, a metal powder with a boiling point of 1600°C or less is preferably contained, and a low-boiling metal powder with a boiling point of 1300°C or less is more preferably contained. The low-boiling metal powder is Li, Mg, Zn, or the like, for example, preferably a Mg powder or a Zn powder, more preferably a Mg powder.

The alloy may be, but is not limited to, Fe-Al, Al-Mg, Fe-Mn, Fe-Si-Mn, or the like.

Al, Mg, and Zr metal powders decrease the amount of oxygen in molten metal as powerful deoxidizers, increase the surface tension of the molten metal, and form a uniform oxide film on a molten pool surface. This is effective in improving the bead shape against the influence of gravity in all-position welding.

Other metal powders, such as Mn, Si, Ni, and Cr, are effective for mechanical performance, such as strength and toughness, of weld metal.

• Inorganic Compound Powder

The flux may contain an inorganic compound powder, preferably an inorganic compound powder with a boiling point of 1600°C or less, more preferably an inorganic compound powder with a boiling point of 1300°C or less. The inorganic compound powder may be a compound powder of a metal element or a compound powder of a non-metal element, such as boron. The metal compound powders are included in inorganic compound powders as compound powders of metal elements.

The inorganic compound powder with a boiling point of 1600°C or less may be $AlF_3$, KF, or the like among the metal fluoride powders. The inorganic compound powder other than fluorides may be $Sb_2O_3$ or the like.

The flux preferably contains at least one of a metal powder and an inorganic compound powder with a boiling point of 1600°C or less in terms of arc stability, more preferably at least one of a metal powder and an inorganic compound powder with a boiling point of 1300°C or less. The total amount of a metal powder and an inorganic compound powder with a boiling point of 1600°C or less is preferably $1.0 \times 10^{-4}$ mol/g or more in terms of arc stability, more preferably $2.0 \times 10^{-4}$ mol/g or more, still more preferably $2.5 \times 10^{-4}$ mol/g or more, of the total mass of the wire. From the same perspective, the total amount is preferably $5.0 \times 10^{-4}$ mol/g or less, more preferably $4.5 \times 10^{-4}$ mol/g or less, still more preferably $4.0 \times 10^{-4}$ mol/g or less.

• Other Composition

The flux may contain other components without losing the advantages of the present invention.

<Optional Components>

An optional component of the wire according to the present embodiment is added to the flux or sheath in the form of a pure metal, an alloy, or a compound, such as an oxide, a carbide, or a nitride.

The optional component may contain a predetermined amount of C, Si, Mn, Ni, Mo, W, Nb, V, Cr, Ti, N, S, P, B, Cu, Ta, rare-earth element (REM), or the like in accordance with the required mechanical performance and welding conditions of weld metal. If necessary, an alkali metal or a compound thereof may be contained.

In iron-based materials, the remainder is preferably composed of Fe and incidental impurities.

The composition of optional components of a flux-cored wire for use in mild steel, high-tensile steel, low-temperature steel, weathering steel, and the like preferably further satisfies C: 0.5% or less by mass, Si: 2.0% or less by mass, Mn: 3.0% or less by mass, Ni: 5.0% or less by mass, Mo: 3.0% or less by mass, W: 3.0% or less by mass, Nb: 3.0% or less by mass, V: 3.0% or less by mass, Cr: 5.0% or less by mass, Ti: 3.0% or less by mass, N: 0.05% or less by mass, S: 0.05% or less by mass, P: 0.05% or less by mass, B: 0.05% or less by mass, Cu: 2.0% or less by mass, Ta: 3.0% or less by mass, and REM: 0.1% or less by mass of the total mass of the wire, for example. These elements may not be contained. A flux-cored wire typically used for mild steel, high-tensile steel, low-temperature steel, weathering steel, and the like contains an Fe-based alloy as a sheath.

In addition to the above, a metal powder and a metal compound composed of at least one alkali metal element in the flux-cored wire may be further contained, and the alkali metal element acts as an arc stabilizer. The alkali metal element may be K, Li, Na, or the like. The total amount of the metal powder and metal compound composed of the alkali metal element is preferably 3% or less, more preferably 2% or less, of the total mass of the wire, and the remainder is preferably composed of Fe and impurities.

The composition of optional components may be the same as the composition typically used for flux-cored wires for use in iron-based alloys, or mild steel, high-tensile steel, or low-temperature steel according to JIS Z 3313: 2009, or weathering steel according to JIS Z 3320: 2012.

Specific preferred embodiments are described below. Furthermore, these elements are not necessarily contained.

C is a component that has an influence on the strength of weld metal, and the strength increases with the C content. In the strength range required for a commonly used type of steel, such as mild steel, high-tensile steel, or low-temperature steel, 0.5% or less is preferred, and 0.2% or less is more preferred. On the other hand, 0.001% or more is preferred for strength adjustment.

Si is a component that has an influence on the strength and toughness of weld metal. To satisfy the mechanical performance range required for a commonly used type of steel, such as mild steel, high-tensile steel, or low-temperature steel, the Si content is preferably 2.0% or less, more preferably 1.2% or less. On the other hand, the Si content is preferably 0.1% or more.

Like Si, Mn is a component that has an influence on the strength and toughness of weld metal. To satisfy the mechanical performance range required for a commonly used type of steel, such as mild steel, high-tensile steel, or low-temperature steel, the Mn content is preferably 3.0% or less, more preferably 2.5% or less. The Mn content is preferably 0.5% or more.

Ni is a component that stabilizes an austenite structure of weld metal and improves toughness at low temperatures and is also a component that can adjust the amount of crystallization of a ferrite structure. The Ni content is preferably 5.0% or less, more preferably 3.0% or less. For use in low-temperature steel or the like, the Ni content is preferably 0.20% or more.

Mo is a component that improves high-temperature strength and pitting corrosion resistance. To satisfy the mechanical performance range required for a commonly used type of steel, such as mild steel, high-tensile steel, or low-temperature steel, the Mo content is preferably 3.0% or less, more preferably 2.0% or less. For use in high-tensile steel, heat-resistant steel, or the like, the Mo content is preferably 0.10% or more.

W is a component that improves high-temperature strength and pitting corrosion resistance. The W content suitable for the mechanical performance range required for a commonly used type of steel, such as mild steel, high-tensile steel, or low-temperature steel, is preferably 3.0% or less, more preferably 2.0% or less.

Nb is a component that has an influence on mechanical performance, such as strength. To satisfy the mechanical performance range required for a commonly used type of steel, such as mild steel, high-tensile steel, or low-temperature steel, the Nb content is preferably 3.0% or less, more preferably 2.0% or less.

V is effective in improving the strength of weld metal but decreases toughness and fracture resistance. Thus, the V content is preferably 3.0% or less, more preferably 2.0% or less.

Cr is a component that has an influence on the mechanical performance, such as strength, of weld metal. To satisfy the mechanical performance range required for a commonly used type of steel, such as mild steel, high-tensile steel, or low-temperature steel, the Cr content is preferably 5.0% or less, more preferably 3.0% or less. For use in heat-resistant steel or the like, the Cr content is preferably 0.10% or more.

Ti binds to C and N and contributes to grain refinement, and mainly serves as a component for improving the toughness of weld metal. To improve toughness in a commonly used type of steel, such as mild steel, high-tensile steel, or low-temperature steel, the Ti content is preferably 3.0% or less, more preferably 1.0% or less. The Ti content is preferably 0.01% or more.

N is a component that improves strength by interstitial solid solution in the crystal structure. However, N causes a pore defect, such as a blowhole or a pit, in weld metal and is therefore not actively added except when high strength is particularly required. The N content is preferably 0.05% or less, more preferably 0.03% or less. The N content is preferably 0.0010% or more.

S is an element that decreases the viscosity and surface tension of droplets when the wire is melted, facilitates droplet transfer and thereby decreases the size of spatters, and improves weldability, but decreases fracture resistance. Thus, the S content is preferably 0.05% or less, more preferably 0.03% or less. The S content is preferably 0.0010% or more.

P decreases fracture resistance and the mechanical properties of weld metal. Thus, the P content is preferably controlled to 0.05% or less, more preferably 0.03% or less.

B prevents a decrease in toughness caused by nitrogen in weld metal but decreases fracture resistance. Thus, the B content is preferably 0.05% or less, more preferably 0.03% or less. To ensure toughness, the B content is preferably 0.0005% or more.

Cu contributes to the improvement of strength and weatherability of weld metal. To achieve the strength and weatherability range required for a commonly used type of steel, such as mild steel, high-tensile steel, or low-temperature steel, the Cu content is preferably 2.0% or less, more preferably 1.0% or less. To ensure the strength and weatherability of weld metal, the Cu content is preferably 0.01% or more.

Ta is a component that has an influence on mechanical performance, such as strength. The Ta content suitable to satisfy the mechanical performance range required for a commonly used type of steel, such as mild steel, high-tensile steel, or low-temperature steel, is preferably 3.0% or less, more preferably 2.0% or less.

REM means a rare-earth element, such as Ce or La. REM has a high affinity for S, suppresses grain boundary segregation of S, and is also effective in preventing hot cracking caused by S. Thus, for a more stabilized arc, the total REM content is preferably 0.1% or less, more preferably 0.05% or less.

The remainder is preferably composed of Fe and impurities.

The Fe content of the remainder is preferably 80% or more and preferably 98% or less.

The impurities mean materials not intentionally added and include Sn, Co, As, and the like, in addition to the above elements. When these elements are contained as oxides, the remainder also includes O. The total impurity content is preferably 0.5% or less, more preferably 0.3% or less.

The composition of an alloy component of a flux-cored wire for use in stainless steel and the like preferably further satisfies C: 0.5% or less by mass, Si: 2.0% or less by mass, Mn: 3.0% or less by mass, Ni: 5.0 to 20.0%, Mo: 3.0% or less by mass, W: 3.0% or less by mass, Nb: 3.0% or less by mass, V: 3.0% or less by mass, Cr: 15.0 to 30.0%, Ti: 3.0% or less by mass, N: 0.50% or less by mass, S: 0.05% or less by mass, P: 0.05% or less by mass, B: 0.05% or less by mass, Cu: 2.0% or less by mass, Ta: 3.0% or less by mass, and REM: 0.1% or less by mass of the total mass of the wire, for example. These elements may not be contained.

In addition to the above, a metal powder and a metal compound composed of at least one alkali metal element in the flux-cored wire may be further contained, and the alkali metal element acts as an arc stabilizer. The alkali metal element may be K, Li, Na, or the like. The total amount of the metal powder and metal compound composed of the alkali metal element is preferably 3% or less, more preferably 2% or less, of the total mass of the wire.

The composition of the alloy component may be the same as the composition typically used for flux-cored wires for use in iron-based alloys or stainless steel according to JIS Z 3323: 2007.

In specific preferred embodiments, elements other than Ni, Cr, Mo, Nb, and N are the same as the composition of an alloy component of a flux-cored wire for use in mild steel, high-tensile steel, low-temperature steel, weathering steel, or the like.

Ni is a component that stabilizes an austenite structure of weld metal and improves toughness at low temperatures and is also a component added in a certain amount for the purpose of adjusting the amount of crystallization of a ferrite structure. For the balance of these properties, the Ni content may be in the same range as the typical Ni content of stainless steel and is preferably 5.0% or more, more preferably 9.0% or more. The Ni content is preferably 20% or less, more preferably 16% or less.

Cr is a component that improves the corrosion resistance of weld metal, but a higher Cr content than necessary results in a reaction with an oxidizing shielding gas to form an oxide and affects the slag composition balance. For the balance of these properties, the Cr content may be in the same range as the typical Cr content of stainless steel and is preferably 15% or more, more preferably 17% or more. The Cr content is preferably 30% or less, more preferably 25% or less.

Mo is a component that improves corrosion resistance, particularly pitting corrosion resistance, but is a rare and economically inefficient component. For the balance of these properties, the Mo content may be in the same range as the typical Mo content of stainless steel and is preferably 5.0% or less, more preferably 4.0% or less.

Nb is a component that is immobilized by binding to C and improves corrosion resistance by suppressing corrosion resistance degradation or sensitization due to the formation of Cr carbide, but is a component that reduces fracture resistance. Thus, the Nb content is preferably 3.0% or less, more preferably 2.0% or less. For use in sensitization resistant steel or the like, the Nb content is preferably 0.2% or more.

N is a component that is effective in stabilizing an austenite structure of weld metal, improving the strength of weld metal, and improving pitting corrosion resistance, but is also a component that causes a pore defect. For the balance of these properties, the N content is preferably 0.5% or less, more preferably 0.4% or less. For use in corrosion-resistant steel, very-low-temperature steel, or the like, the N content is preferably 0.1% or more.

The composition of an alloy component of a flux-cored wire for use in Ni-based alloys and the like preferably further satisfies C: 0.5% or less by mass, Si: 2.0% or less by mass, Mn: 4.0% or less by mass, Fe: 10.0% or less by mass, Mo: 20.0% or less by mass, W: 5.0% or less by mass, Nb: 4.5% or less by mass, V: 3.0% or less by mass, Cr: 10.0 to 35.0%, Co: 2.5% or less by mass, Ti: 1.0% or less by mass, N: 0.50% or less by mass, S: 0.05% or less by mass, P: 0.05% or less by mass, B: 0.05% or less by mass, Cu: 2.0% or less by mass, Ta: 3.0% or less by mass, and REM: 0.1% or less by mass of the total mass of the wire, for example. These elements may not be contained.

In addition to the above, a metal powder and a metal compound composed of at least one alkali metal element in the flux-cored wire may be further contained, and the alkali metal element acts as an arc stabilizer. The alkali metal element may be K, Li, Na, or the like. The total amount of the metal powder and metal compound composed of the alkali metal element is preferably 3% or less, more preferably 2% or less, of the total mass of the wire, and the remainder is preferably composed of Ni and impurities.

The composition of the alloy component may be the same as the composition typically used for flux-cored wires for use in Ni-based alloys or Ni-based alloys according to JIS Z 3335: 2014.

In specific preferred embodiments, elements other than Fe and Co are the same as the composition of an alloy component of a flux-cored wire for use in stainless steel or the like.

Fe is a component that is added to improve the economic efficiency of weld metal without adversely affecting mechanical characteristics, corrosion resistance, or the like. To exhibit the corrosion resistance, heat resistance, or the like required for Ni-based alloys, the upper limit is preferably 10.0% or less.

Like Ni, Co is a component that stabilizes an austenite structure. Typical Ni materials contain a relatively large amount of Co as an impurity. Thus, Co is a component inevitably contained. Co has very low economic efficiency, and the active addition of Co is undesirable. The Co content is preferably 2.5% or less.

The sheath of the flux-cored wire may be, but is not limited to, ordinary steel, SUH 409L (JIS G 4312: 2019), SUS 430, SUS 304L, SUS 316L, SUS 310S (all of which are JIS G 4305: 2012), Alloy 600 (UNS N06600), Alloy 625 (UNS N06625), Alloy 22 (UNS N06022), Alloy 276 (UNS N10276), or the like, for example.

In a flux-cored wire with a low flux content in an internal space formed by the sheath, a flux column is difficult to form while welding. Furthermore, a flux transfer phenomenon occurs in the wire. In this case, the flux content (hereinafter also referred to as the flux filling ratio or the flux ratio) in the longitudinal direction of the wire may vary with the state of vibration of a wire production line, and the quality of the wire may vary. Thus, the flux content of the wire is preferably 10% or more by mass, more preferably 11% or more by mass, of the total mass of the wire.

Although a thin sheath material may be used to contain a large amount of flux in a small amount of sheath, an extremely thin sheath material may break in a wire drawing process, and the wire may break. Thus, the flux content of the wire is preferably 20% or less, more preferably 18% or less.

Although the flux-cored wire may have any wire diameter (D), in consideration of combination with a typical welding apparatus and weldability, the diameter is preferably 0.9 mm or more, more preferably 1.0 mm or more, still more preferably 1.2 mm or more, and preferably 2.0 mm or less, more preferably 1.6 mm or less.

The wire may also have any cross-sectional shape and may be of a type with a seam in the sheath, of a seamless type without a seam in the sheath, or the like. The surface of the seamless type may be plated with Cu or the like.

«Production Method»

The flux-cored wire according to the present embodiment can be produced by a known method and can be produced by any method. For example, the sheath is filled with the flux. At that time, the composition of the sheath, the composition of the flux, and the flux content are appropriately adjusted in the above ranges. The wire filled with the flux in the sheath is reduced in diameter by rolling or wire drawing to form a flux-cored wire with a predetermined outer diameter.

«Welding Method»

A welding method according to the present embodiment is gas-shielded arc welding using the straight-polarity flux-cored wire and a shielding gas.

The shielding gas may be, but is not limited to, a single shielding gas of only one component or a mixture of two or more gases. For example, the shielding gas preferably contains 60% or more by volume of $CO_2$ gas as an active gas component or 60% or more by volume of Ar gas as an inert gas component.

The welding current, welding voltage, welding speed, welding position, shielding gas flow rate, and the like are appropriately adjusted and determined in welding.

«Weld Metal»

A weld metal according to the present embodiment is formed by welding with the flux-cored wire. A base material to be welded may be a commonly used base material, such as mild steel, high-tensile steel, low-temperature steel, stainless steel, or a Ni-based alloy.

Although the composition of weld metal formed by welding depends on the welding conditions, such as the compositions of the base material and the wire and the type of shielding gas, and cannot be uniformly defined, the composition has a high wire feed speed and high execution efficiency for the same heat input.

EXAMPLES

Although the present invention is more specifically described in the following examples, the present invention is not limited to these examples. Various modifications may be made to these examples according to the gist of the present invention. These modifications are also within the technical scope of the present invention.

<Evaluation Method>

(Evaluation of High Weldability)

Welding was performed under the following welding conditions, and the high weldability was evaluated by measuring the wire feed speed while welding.

The wire feed speed was evaluated on the basis of a wire feed speed of 3.69 (m/min) when a flux-cored wire according to Comparative Example 1 was used. An improvement rate of 5% or more indicates high deposition rate performance. The improvement rate refers to the rate of increase in wire feed speed relative to Comparative Example 1.

(Welding Conditions)

Welding current: 240 A
Welding voltage: Appropriate (20 to 23 V)
Welding speed: 30 cm/min
Welding position: downward, bead on plate
Tip-base material distance: 15 mm
Shielding gas: $CO_2$ gas 100%
Gas flow rate: 25 L/min
Base material: SM490A (rolled steel for welded structure)

<Examples 1 to 17 and Comparative Example 1>

A welding test was performed using flux-cored wires with the compositions shown in Tables 1 to 3 under the above welding conditions. No oxide or carbonate was actively added to flux compositions. The oxide or carbonate content of each flux-cored wire was 0.5% or less of the total mass of the wire.

Fig. 4 shows the relationship between the weighted geometric mean of work functions and the wire feed speed.

In Fig. 4, ■ indicates the result of Comparative Example 1, and ♦ indicates the results of examples.

[Table 1]

Table 1

| | | Comparative example | Example | | | | | | |
|---|---|---|---|---|---|---|---|---|---|
| | | 1 | 1 | 2 | 3 | 4 | 5 | 6 |
| Type of wire sheath | | Mild steel | Mild steel | Mild steel | Mild steel | Mild steel | Mild steel | Mild steel |
| Wire diameter [mm] | | 1.4 | 1.4 | 1.4 | 1.4 | 1.4 | 1.4 | 1.4 |
| Content per total mass of wire [mass%] | $CaF_2$ | 0 | 0.3 | 0.4 | 0.5 | 0.6 | 0.7 | 0.7 |
| | $BaF_2$ | 2.7 | 2.8 | 2.4 | 2.5 | 2.3 | 2.4 | 2.1 |
| | $SrF_2$ | 0 | 0 | 0 | 0 | 0 | 0 | 0 |
| | $AlF_3$ | 0 | 0.3 | 0.7 | 0.5 | 0.6 | 0.3 | 0.7 |
| | Fe | 92.1 | 91.3 | 91.3 | 91.3 | 91.3 | 91.3 | 91.3 |
| | Mg | 0.7 | 0.7 | 0.7 | 0.7 | 0.7 | 0.7 | 0.7 |
| | Other metals | 4.5 | 4.5 | 4.5 | 4.5 | 4.5 | 4.5 | 4.5 |
| | Other impurities | Remainder | Remainder | Remainder | Remainder | Remainder | Remainder | Remainder |
| Metal element content per total mass of wire in metal elements constituting metal compound powders $\times 10^{-4}$ [mol/g] | Ba | 1.5 | 1.6 | 1.4 | 1.4 | 1.3 | 1.4 | 1.2 |
| | Ca | 0 | 0.4 | 0.5 | 0.6 | 0.8 | 0.9 | 0.9 |
| | Sr | 0 | 0 | 0 | 0 | 0 | 0 | 0 |
| | Al | 0 | 0.4 | 0.8 | 0.6 | 0.7 | 0.4 | 0.8 |
| Metal element content per total mass of wire in metal elements constituting metal powder (single metal or alloy powder) $\times 10^{-4}$ [mol/g] | Mg | 2.7 | 2.7 | 2.7 | 2.7 | 2.7 | 2.7 | 2.7 |
| Metal element constituting metal compound powder added (element used for calculation of work function) | | Ba | Ba,Ca,Al | Ba,Ca,Al | Ba,Ca,Al | Ba,Ca,Al | Ba,Ca,Al | Ba,Ca,Al |

EP 3 967 445 A1

14

(continued)

| | | Comparative example | Example | | | | | |
|---|---|---|---|---|---|---|---|---|
| | | 1 | 1 | 2 | 3 | 4 | 5 | 6 |
| Mole fraction in whole metal compound | Ba | 1.00 | 0.65 | 0.52 | 0.55 | 0.48 | 0.52 | 0.41 |
| | Ca | 0 | 0.18 | 0.18 | 0.24 | 0.28 | 0.32 | 0.31 |
| | Sr | 0 | 0 | 0 | 0 | 0 | 0 | 0 |
| | Al | 0 | 0.17 | 0.30 | 0.21 | 0.25 | 0.15 | 0.28 |
| Weighted geometric mean of work functions ⌊eV⌋ | | 0.99 | 1.38 | 1.66 | 1.52 | 1.63 | 1.47 | 1.73 |
| Metal powder or inorganic compound powder with boiling point of 1600°C or less | | Mg | $AlF_3$,Mg | $AlF_3$,Mg | $AlF_3$,Mg | $AlF_3$,Mg | $AlF_3$,Mg | $AlF_3$,Mg |
| Total content of metal powder or inorganic compound with boiling point of 1600°C or less per total mass of wire $\times 10^{-4}$ [mol/g] | | 2.7 | 3.1 | 3.5 | 3.2 | 3.4 | 3.1 | 3.5 |
| Wire feed speed [m/min] | | 3.69 | 4.40 | 4.57 | 4.76 | 4.57 | 4.48 | 4.96 |
| Improvement rate of wire feed speed compared with Comparative example 1 [%] | | - | 19.2 | 23.8 | 29.0 | 23.8 | 21.4 | 34.4 |

[Table 2]

Table 2

| | | Comparative example | Example | | | | | | |
|---|---|---|---|---|---|---|---|---|---|
| | | 1 | 7 | 8 | 9 | 10 | 11 | 12 |
| Type of wire sheath | | Mild steel | Mild steel | Mild steel | Mild steel | Mild steel | Mild steel | Mild steel |
| Wire diameter ⌊mm⌋ | | 1.4 | 1.4 | 1.4 | 1.4 | 1.4 | 1.4 | 1.4 |
| Content per total mass of wire [mass%] | $CaF_2$ | 0 | 0.7 | 0.7 | 0.9 | 0.9 | 1.0 | 0.9 |
| | $BaF_2$ | 2.7 | 1.9 | 1.5 | 1.8 | 1.8 | 1.5 | 1.8 |
| | $SrF_2$ | 0 | 0 | 0 | 0 | 0 | 0 | 0 |
| | $AlF_3$ | 0 | 0.8 | 1.2 | 0.5 | 0.2 | 0.8 | 0 |
| | Fe | 92.1 | 91.3 | 91.3 | 91.6 | 91.9 | 91.3 | 92.1 |
| | Mg | 0.7 | 0.7 | 0.7 | 0.7 | 0.7 | 0.7 | 0.7 |
| | Other metals | 4.5 | 4.5 | 4.5 | 4.5 | 4.5 | 4.5 | 4.5 |
| | Other impurities | Remainder | Remainder | Remainder | Remainder | Remainder | Remainder | Remainder |
| Metal element content per total mass of wire in metal elements constituting metal compound powders $\times 10^{-4}$ [mol/g] | Ba | 1.5 | 1.1 | 0.9 | 1.0 | 1.0 | 0.9 | 1.0 |
| | Ca | 0 | 0.9 | 0.9 | 1.1 | 1.1 | 1.3 | 1.1 |
| | Sr | 0 | 0 | 0 | 0 | 0 | 0 | 0 |
| | Al | 0 | 1.0 | 1.4 | 0.6 | 0.3 | 1.0 | 0 |
| Metal element content per total mass of wire in metal elements constituting metal powder (single metal or alloy powder) $\times 10^{-4}$ [mol/g] | Mg | 2.7 | 2.7 | 2.7 | 2.7 | 2.7 | 2.7 | 2.7 |
| Metal element constituting metal compound powder added (element used for calculation of work function) | | Ba | Ba,Ca,Al | Ba,Ca,Al | Ba,Ca,Al | Ba,Ca,Al | Ba,Ca,Al | Ba,Ca |

(continued)

| | | Comparative example | Example | | | | | |
|---|---|---|---|---|---|---|---|---|
| | | 1 | 7 | 8 | 9 | 10 | 11 | 12 |
| Mole fraction in whole metal compound | Ba | 1.00 | 0.37 | 0.28 | 0.37 | 0.42 | 0.28 | 0.48 |
| | Ca | 0 | 0.30 | 0.28 | 0.41 | 0.46 | 0.42 | 0.52 |
| | Sr | 0 | 0 | 0 | 0 | 0 | 0 | 0 |
| | Al | 0 | 0.33 | 0.44 | 0.22 | 0.12 | 0.30 | 0 |
| Weighted geometric mean of work functions ⌊eV⌋ | | 0.99 | 1.85 | 2.13 | 1.69 | 1.53 | 1.91 | 1.34 |
| Metal powder or inorganic compound powder with boiling point of 1600°C or less | | Mg | $AlF_3$,Mg | $AlF_3$,Mg | $AlF_3$,Mg | $AlF_3$,Mg | $AlF_3$,Mg | Mg |
| Total content of metal powder or inorganic compound with boiling point of 1600°C or less per total mass of wire $\times 10^{-4}$ [mol/g] | | 2.7 | 3.7 | 4.1 | 3.3 | 3.0 | 3.7 | 2.7 |
| Wire feed speed [m/min] | | 3.69 | 5.00 | 5.37 | 4.48 | 4.29 | 5.37 | 4.18 |
| Improvement rate of wire feed speed compared with Comparative example 1 [%] | | - | 35.5 | 45.5 | 21.4 | 16.3 | 45.5 | 13.3 |

[Table 3]

[Table 3]

Table 3

| | | Comparative example | Example | | | | |
|---|---|---|---|---|---|---|---|
| | | 1 | 13 | 14 | 15 | 16 | 17 |
| Type of wire sheath | | Mild steel | Mild steel | Mild steel | Mild steel | Mild steel | Mild steel |
| Wire diameter [mm] | | 1.4 | 1.4 | 1.4 | 1.4 | 1.4 | 1.4 |
| Content per total mass of wire [mass%] | $CaF_2$ | 0 | 1.3 | 0.1 | 0 | 0 | 0 |
| | $BaF_2$ | 2.7 | 1.3 | 2.6 | 2.3 | 1.8 | 1.3 |
| | $SrF_2$ | 0 | 0 | 0 | 0.4 | 0.9 | 1.3 |
| | $AlF_3$ | 0 | 0 | 0 | 0 | 0 | 0 |
| | Fe | 92.1 | 92.1 | 91.6 | 93.0 | 93.0 | 93.0 |
| | Mg | 0.7 | 0.7 | 0.8 | 0.6 | 0.6 | 0.6 |
| | Other metals | 4.5 | 4.5 | 4.8 | 3.6 | 3.6 | 3.6 |
| | Other impurities | Remainder | Remainder | Remainder | Remainder | Remainder | Remainder |
| Metal element content per total mass of wire in metal elements constituting metal compound powders $\times 10^{-4}$ [mol/g] | Ba | 1.5 | 0.8 | 1.5 | 1.3 | 1.0 | 0.8 |
| | Ca | 0 | 1.7 | 0.1 | 0 | 0 | 0 |
| | Sr | 0 | 0 | 0 | 0.3 | 0.7 | 1.1 |
| | Al | 0 | 0 | 0 | 0 | 0 | 0 |
| Metal element content per total mass of wire in metal elements constituting metal powder (single metal or alloy powder) $\times 10^{-4}$ [mol/g] | Mg | 2.7 | 2.7 | 3.2 | 2.6 | 2.6 | 2.6 |
| Metal element constituting metal compound powder added (element used for calculation of work function) | | Ba | Ba,Ca | Ba,Ca | Ba,Sr | Ba,Sr | Ba,Sr |

EP 3 967 445 A1

(continued)

| | | Comparative example | Example | | | | |
|---|---|---|---|---|---|---|---|
| | | 1 | 13 | 14 | 15 | 16 | 17 |
| Mole fraction in whole metal compound | Ba | 1.00 | 0.31 | 0.91 | 0.81 | 0.60 | 0.42 |
| | Ca | 0 | 0.69 | 0.09 | 0 | 0 | 0 |
| | Sr | 0 | 0 | 0 | 0.19 | 0.40 | 0.58 |
| | Al | 0 | 0 | 0 | 0 | 0 | 0 |
| Weighted geometric mean of work functions $\lfloor$eV$\rfloor$ | | 0.99 | 1.48 | 1.04 | 1.04 | 1.09 | 1.14 |
| Metal powder or inorganic compound powder with boiling point of 1600°C or less | | Mg | Mg | Mg | Mg | Mg | Mg |
| Total content of metal powder or inorganic compound with boiling point of 1600°C or less per total mass of wire $\times$ $10^{-4}$ [mol/g] | | 2.7 | 2.7 | 3.2 | 2.6 | 2.6 | 2.6 |
| Wire feed speed [m/min] | | 3.69 | 4.40 | 4.15 | 3.89 | 3.99 | 4.15 |
| Improvement rate of wire feed speed compared with Comparative example 1 [%] | | | 19.2 | 12.5 | 5.4 | 8.1 | 12.5 |

The flux-cored wire according to Comparative Example 1 contained only $BaF_2$ as a metal compound powder in the flux and had a weighted geometric mean of work functions ($\Phi$) of less than 1.00. Adjusting the weighted geometric mean ($\Phi$) in the range of 1.00 to ($-0.0908D^2 + 0.5473D + 1.547$) significantly improved the wire feed speed and achieved high weldability.

The present invention has been described in detail with reference to particular embodiments. It is apparent to a person skilled in the art that various alterations and modifications may be made to the embodiments without departing from the spirit and scope of the present invention. The present application is based on Japanese Patent Application (Japanese Patent Application No. 2019-089014) filed on May 9, 2019, which is incorporated herein by reference.

**Claims**

1. A flux-cored wire for use in straight-polarity gas-shielded arc welding,

    wherein a flux of the flux-cored wire contains one or several types of metal compound powders, and
    when one or several types of metal elements constituting the metal compound powders are stable compounds in a high-temperature environment, a weighted geometric mean of work functions of the stable compounds satisfies the following relationship with a wire diameter of the flux-cored wire:

$$1.00 \leq \Phi \leq -0.0908D^2 + 0.5473D + 1.547$$

$$\Phi = \Phi_1^{n1/ntotal} \times \Phi_2^{n2/ntotal} \cdots \times \Phi_m^{nm/ntotal}$$

    wherein D denotes a wire diameter (mm), $\Phi$ denotes the weighted geometric mean (eV) of the work functions of the stable compounds, and $\Phi_1$ to $\Phi_m$ (m denotes a natural number) denote respective work functions (eV) of m types of stable compounds, $n_1$ to $n_m$ denote respective amounts (mol/g) of m types of metal elements that become the m types of stable compounds in a total mass of the flux-cored wire, and ntotai denotes a total amount (mol/g) of the m types of metal elements in the total mass of the flux-cored wire.

2. The flux-cored wire according to Claim 1, wherein the stable compounds are oxides or a mixture of oxides.

3. The flux-cored wire according to Claim 1, wherein the stable compounds have a work function of 4.0 eV or less.

4. The flux-cored wire according to Claim 1, wherein

    the metal compound powders include one or several types of metal fluoride powders, and
    a total amount of metal oxide powder in the metal compound powders is 0.5% or less by mass of the total mass of the wire.

5. The flux-cored wire according to Claim 1, comprising a total amount of $1.0 \times 10^{-4}$ mol/g or more of at least one of a metal powder and an inorganic compound powder with a boiling point of 1600°C or less based on the total mass of the wire.

6. The flux-cored wire according to Claim 2, comprising a total amount of $1.0 \times 10^{-4}$ mol/g or more of at least one of a metal powder and an inorganic compound powder with a boiling point of 1600°C or less based on the total mass of the wire.

7. The flux-cored wire according to Claim 3, comprising a total amount of $1.0 \times 10^{-4}$ mol/g or more of at least one of a metal powder and an inorganic compound powder with a boiling point of 1600°C or less based on the total mass of the wire.

8. The flux-cored wire according to Claim 4, comprising a total amount of $1.0 \times 10^{-4}$ mol/g or more of at least one of a metal powder and an inorganic compound powder with a boiling point of 1600°C or less based on the total mass of the wire.

9. The flux-cored wire according to Claim 1, comprising pure Fe, an Fe-based alloy, or a Ni-based alloy as a sheath.

**10.** A weld metal formed by welding with a flux-cored wire according to any one of Claims 1 to 9.

**11.** A welding method using the flux-cored wire according to any one of Claims 1 to 9 and a shielding gas.

# FIG. 1

# FIG. 2

# FIG. 3

$$y = -0.0908x^2 + 0.5473x + 1.547$$

Y-axis: WORK FUNCTION AT WHICH THERMIONIC CURRENT IS MORE THAN 200 A [eV]

X-axis: WIRE DIAMETER [mm]

FIG. 4

## INTERNATIONAL SEARCH REPORT

| | International application No. |
|---|---|
| | PCT/JP2020/018457 |

A. CLASSIFICATION OF SUBJECT MATTER
B23K 35/368(2006.01)i; B23K 35/30(2006.01)i; C22C 19/05(2006.01)i
FI:  B23K35/368 B; B23K35/30 320A; B23K35/30 320B; B23K35/30 320Q;
  C22C19/05 B
According to International Patent Classification (IPC) or to both national classification and IPC

B. FIELDS SEARCHED

Minimum documentation searched (classification system followed by classification symbols)
B23K35/368; B23K35/30; C22C19/05

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2017/013965 A1 (KOBE STEEL, LTD.) 26.01.2017 (2017-01-26) paragraphs [0050]-[0058], tables 1-5 | 1-11 |
| X | JP 2015-77618 A (KOBE STEEL, LTD.) 23.04.2015 (2015-04-23) paragraph [0122], table 1 | 1-11 |
| X | JP 2000-84694 A (KOBE STEEL, LTD.) 28.03.2000 (2000-03-28) paragraph [0029], tables 1-6 | 1-4, 9-11 |
| A | CN 1943965 A (TIEMAO WELDING MATERIAL CO., LTD., WUHAN) 11.04.2007 (2007-04-11) | 1-11 |
| A | CN 101745754 A (TIANJIN UNIVERSITY) 23.06.2010 (2010-06-23) | 1-11 |

☐ Further documents are listed in the continuation of Box C.   ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 July 2020 (15.07.2020) | 28 July 2020 (28.07.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application no.

PCT/JP2020/018457

| Patent Documents referred in the Report | Publication Date | Patent Family | Publication Date |
|---|---|---|---|
| WO 2017/013965 A1 | 26 Jan. 2017 | JP 2017-24032 A KR 10-2018-00165 69 A SG 11201800258Q A CN 107848082 A | |
| JP 2015-77618 A | 23 Apr. 2015 | CN 104551336 A | |
| JP 2000-84694 A | 28 Mar. 2000 | (Family: none) | |
| CN 1943965 A | 11 Apr. 2007 | (Family: none) | |
| CN 101745754 A | 23 Jun. 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2055696 A
- JP 11207491 A
- JP 11058069 A
- JP 2019089014 A

**Non-patent literature cited in the description**

- **ANDO ; SANPO et al.** *Yosetsu Aku Gensho,* 1967
- **G. V. SAMSONOV ; ENDO.** *Saishin Sankabutsu Binran: Butsuriteki Kagakuteki Seishitsu, Nichi-So Tsushin-sha,* 1979
- CRC Handbook of Chemistry and Physics. CRC Press, 1998
- **YAMAZAKI et al.** The Surface Temperature Measurement of Weld Pool by Infrared Two-Color Pyrometry. *Quarterly Journal of the Japan Welding Society,* 2009, vol. 27
- **ANDO et al.** Yosetsu Aku Gensho. 1967